Europäisches Patentamt

European Patent Office

Office européen des brevets

(11) Veröffentlichungsnummer: **0 278 051**
**A2**

(12) **EUROPÄISCHE PATENTANMELDUNG**

(21) Anmeldenummer: 87114633.8

(22) Anmeldetag: 07.10.87

(51) Int. Cl.⁴: **G11B 33/02** , G11B 19/02 ,
G11B 33/12

(30) Priorität: 13.02.87 DE 8702320 U

(43) Veröffentlichungstag der Anmeldung:
17.08.88 Patentblatt 88/33

(84) Benannte Vertragsstaaten:
**AT BE CH DE FR GB IT LI LU NL SE**

(71) Anmelder: **Berendsohn AG**
**Alte Sülldorfer Landstrasse 400**
**D-2000 Hamburg 56(DE)**

(72) Erfinder: **Lasch, Manfred**
**Ulzburger Landstr. 482**
**D-2085 Quickborn-Heide(DE)**

(74) Vertreter: **Glaeser, Joachim, Dipl.-Ing. et al**
**Patentanwalt Königstrasse 28**
**D-2000 Hamburg 50(DE)**

(54) Vorrichtung zur Wiedergabe von Informationen.

(57) Vorrichtung zur Wiedergabe von in einem Speicher, auf einem Magnetband oder einer Magnetscheibe gespeicherten Informationen, insbesondere Sprach-oder Bildinformationen, mit einem im wesentlichen kastenförmigen Gehäuse, in dem ein Abspielgerät, ein Lautsprecher, ein Bildschirm und eine Energieversorgung untergebracht sind, wobei das Gehäuse (10) mit einem aufklappbaren Deckel (11) versehen ist und der geschlossene Deckel (11) mit dem Schaltteil (12) eines das Abspielgerät bzw. die Wiedergabe von Informationen einschaltenden elektrischen Schalters in Berührungslage angeordnet ist.

Xerox Copy Centre

## Vorrichtung zur Wiedergabe von Informationen.

Die Erfindung bezieht sich auf eine Vorrichtung zur Wiedergabe von in einem Speicher, auf einem Magnetband oder einer Magnetscheibe gespeicherten Informationen, insbesondere Sprach-oder Bildinformationen, mit einem im wesentlichen kastenförmigen Gehäuse, in dem ein Abspielgerät, ein Lautsprecher, ein Bildschirm und eine Energieversorgung untergebracht sind.

Es sind Tonbandgeräte bekannt, die an ihrem Äußeren eine Reihe von Bedienungsteilen aufweisen, so daß man die Informationen vom Band abspielen kann. Will man eine bestimmte Information abrufen, die sich nicht am Anfang des Bandes befindet, so muß das Band bis dahin abgehört werden, wobei ein Schnellauf diesen Vorgang beschleunigen kann. Es gibt elektronische Hilfsmittel für diesen Zweck, aber auch durch sie ist nicht sichergestellt, daß man eine bestimmte und nur diese bestimmte Information von einem Band abrufen kann.

Es kommt noch hinzu, daß bisher bekannte Tonbandgeräte mehr oder weniger freiliegende Bedienungsteile aufweisen, die beispielsweise beim Transport durchaus auch versehentlich gedrückt werden können, was im allgemeinen nicht erwünscht ist.

Die Erfindung befaßt sich mit dem Problem eine Vorrichtung der eingangs genannten Art so auszugestalten, daß sie die erwähnten Nachteile bekannter Ausführungsformen nicht aufweist.

Erreicht wird dies durch eine Vorrichtung nach den Patentansprüchen.

Die Vorrichtung gemäß der Erfindung hat rein vom Äußeren her die Form eines Buches. Öffnet man den Deckel, so wird dadurch ein Schalter betätigt, so daß die auf dem Speicher gespeicherten Informationen vom Anfang her abgerufen und wiedergegeben werden.

Nach einer bevorzugten Ausführungsform der Erfindung sind in der Form von Daumenabschnitten Registerteile am Rand des buchförmigen Gehäuses vorgesehen, so daß mit Hilfe dieses Registers gewünschte Informationen abgerufen und wiedergegeben werden können. Eine solche Vorrichtung kann beispielsweise für einen Pharmareferenten sehr nützlich sein, der in einem Fachgespräch mit einem Arzt fachliche Informationen über bestimmte Arzneimittel abrufen kann, beispielsweise aufgezeichnete Interviews mit einer Koryphäe auf dem in Frage kommenden Gebiet.

Die Registerabschnitte können mit einem Kennwort beschriftet sein, so daß die Vorrichtung gemäß der Erfindung insgesamt wie ein Buch gehandhabt werden kann.

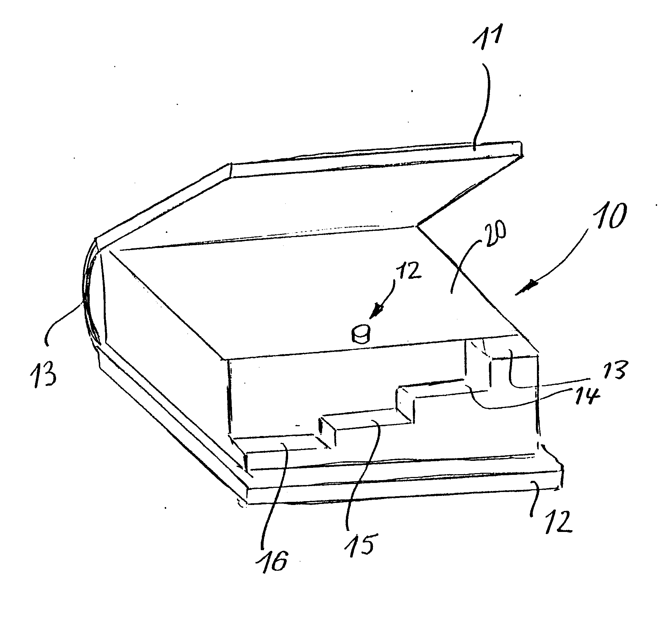

Die Erfindung wird nachstehend an Hand der Zeichnung beispielsweise erläutert.

Diese zeigt eine schaubildliche Ansicht einer Vorrichtung gemäß der Erfindung.

In der Figur ist ein kastenförmiges Gehäuse 10 gezeigt, das im wesentlichen das Aussehen eines Buches hat. Es sind zwei Deckel 11 und 12 vorgesehen, von denen der obere Deckel aufgeklappt ist. Der Innenraum des Gehäuses 10 ist durch einen weiteren Abdeckteil 20 verschlossen. Im Innenraum befinden sich (nicht gezeigt) der Speicher, also z.B. ein Magnetband, der Lautsprecher, der Bildschirm sowie die Energieversorgung.

Durch den Deckelteil 20 ragt nach oben ein Kontaktteil 12 eines nicht gezeigten Schalters vor. In der Schließlage des Deckels 11 ist der Schließteil 12 in seiner unteren Lage, in der geöffneten Lage des Deckels 11 in seiner oberen lage. In dieser Lage wird die in dem Speicher aufgezeichnete Information abgespielt.

In Form von Daumenabschnitten oder dergl. befinden sich Registerteile 13-16 im vorderen Teil des kastenförmigen Gehäuses 10. Die Registerteile 13 - 16 sind mit nicht gezeigten Schaltern verbunden, so daß durch Drücken oder Berühren dieser Registerteile 13 - 16 Stromkreise geschlossen werden, die bewirken, daß ein bestimmter Teil des Speichers wiedergegeben wird. Die Teile 13 - 16 können beschriftet sein, so daß auf diese Art und Weise eine eindeutige Zuordnung des Kennwortes zum zugehörigen Anfang einer Information gegeben ist.

## Ansprüche

1. Vorrichtung zur Wiedergabe von in einem Speicher, auf einem Magnetband oder einer Magnetscheibe gespeicherten Informationen, insbesondere Sprach-oder Bildinformationen, mit einem im wesentlichen kastenförmigen Gehäuse, in dem ein Abspielgerät, ein Lautsprecher, ein Bildschirm und eine Energieversorgung untergebracht sind, wobei das Gehäuse (10) mit einem aufklappbaren Deckel (11) versehen ist und der geschlossene Deckel (11) mit dem Schaltteil (12) eines das Abspielgerät bzw. die Wiedergabe von Informationen einschaltenden elektrischen Schalters in Berührungslage angeordnet ist.

2. Vorrichtung nach Anspruch 1, dadurch gekennzeichnet, daß Registerteile (13 bis 16) am Gehäuse (10) angeordnet sind, die mit dem Schaltteil jeweils eines Schalters für das Herauslesen bestimmter Informationen von dem Magnetband in Berührungslage angeordnet sind.